# EUROPEAN PATENT SPECIFICATION

(11) **EP 2 797 832 B1**
(45) Date of publication and mention of the grant of the patent: **05.02.2025**
(21) Application number: 12821358.4
(22) Date of filing: 31.12.2012
(51) Int. Cl.: G05D 1/00, B62B 5/00, B62B 3/06, B66F 9/06, B66F 9/075

(54) **AUTO-NAVIGATING VEHICLE WITH FIELD-OF-VIEW ENHANCING SENSOR POSITIONING AND METHOD OF ACCOMPLISHING SAME**
SELBSTNAVIGIERENDES FAHRZEUG MIT SICHTFELDOPTIMIERENDER SENSORPOSITIONIERUNG UND VERFAHREN ZUM ERHALT
VÉHICULE À PILOTAGE AUTOMATIQUE DOTÉ D'UN POSITIONNEMENT DE CAPTEUR QUI AMÉLIORE LE CHAMP DE VISION ET PROCÉDÉ DE RÉALISATION DE CE DERNIER

(30) Priority: 30.12.2011 US 201161581863 P
(43) Date of publication of application: 05.11.2014
(73) Proprietor: Seegrid Corporation, Pittsburgh, PA 15275 (US)
(72) Inventor: WEISS, Mitchell, Carlisle, Massachusetts 01741 (US)
(74) Representative: Müller-Boré & Partner Patentanwälte PartG mbB
(86) International application number: PCT/US2012/072317
(87) International publication number: WO 2013/102212

(56) References cited:
- GB-A- 2 383 310
- US-A1- 2004 073 359
- US-A1- 2006 104 800

## Description

### FIELD OF INTEREST

The present inventive concepts relate to the field of robotic, self-navigating, and auto-navigating vehicles, and more particularly to such vehicles with available hands-on operator control.

### BACKGROUND

Robots, generally, can be used in a wide variety of contexts, industrial, military, and personal. Some robots have no capacity or intention for hands-on operator interaction to perform their tasks, e.g., robotic vacuum cleaners and unmanned aerial vehicles. Other robots do, however, require or accommodate direct (non-remote) user interaction during operation.

Robotic, self-navigating, and auto-navigating vehicles (collectively "auto-navigating vehicles") are vehicles that move autonomously from place to place. While some auto-navigating vehicles do not anticipate or accommodate hands-on operation by a human operator, some auto-navigating vehicles do anticipate, or at lest accommodate, human operators being aboard for the performance of certain tasks. For example, auto-navigating pallet trucks and tuggers can have robotic navigation ability, where a human operator can ride along to perform tasks once the auto-navigating vehicle arrives at its destination.

A warehouse, which is primarily used for the storage of goods for commercial purposes, is a facility having increased utility for robots and auto-navigating vehicles. The storage provided by a warehouse is generally intended to be temporary, as such goods ultimately may be intended for a retailer, consumer or customer, distributor, transporter or other subsequent receiver. A warehouse can be a standalone facility, or can be part of a multi-use facility. Thousands of types of items can be stored in a typical warehouse. The items can be small or large, individual or bulk. It is common to load items on a pallet for transportation, and the warehouse may use pallets as a manner of internally transporting and storing items.

A well-run warehouse is well-organized and maintains an accurate inventory of goods. Goods can come and go frequently, throughout the day, in a warehouse. In fact, some large and very busy warehouses work three shifts, continually moving goods throughout the warehouse as they are received or needed to fulfill orders. Shipping and receiving areas, which may be the same area, are the location(s) in the warehouse where large trucks pick-up and drop-off goods. The warehouse can also include a staging area - as an intermediate area between shipping and receiving and storage aisles and areas within the warehouse where the goods are stored. The staging area, for example, can be used for confirming that all items on the shipping manifest were received in acceptable condition. It can also be used to assemble or otherwise prepares orders for shipping.

Goods in a warehouse tend to be moved in one of two ways, either by pallet or by cart (or trailer). A pallet requires a pallet transport for movement, such as a pallet jack, pallet truck, forklift, or stacker. A stacker is a piece of equipment that is similar to a fork lift, but can raise the pallet to significantly greater heights, e.g., for loading a pallet on a warehouse shelf. A cart requires a tugger (or "tow cart"), which pulls the cart from place to place.

A pallet transport can be manual or motorized. A traditional pallet jack is a manually operated piece of equipment, as is a traditional stacker. When a pallet transport is motorized, it can take the form of a powered pallet jack, pallet truck, or forklift (or lift truck). A motorized stacker is referred to as a power stacker. A motorized pallet jack is referred to as a powered pallet jack, which an operator cannot ride, but walks beside. A pallet truck is similar to a powered pallet jack, but includes a place for an operator to stand.

As with motorized pallet transports, a tugger can be in the form of a drivable vehicle or in the form of a powered vehicle along the side of which the operator walks. In either form, a tugger includes a hitch that engages with a companion part on the cart, such as a sturdy and rigid ring or loop.

Pallet transports, tuggers, and other vehicles that transport goods in a warehouse or similar setting can be generally referred to as "warehouse vehicles."

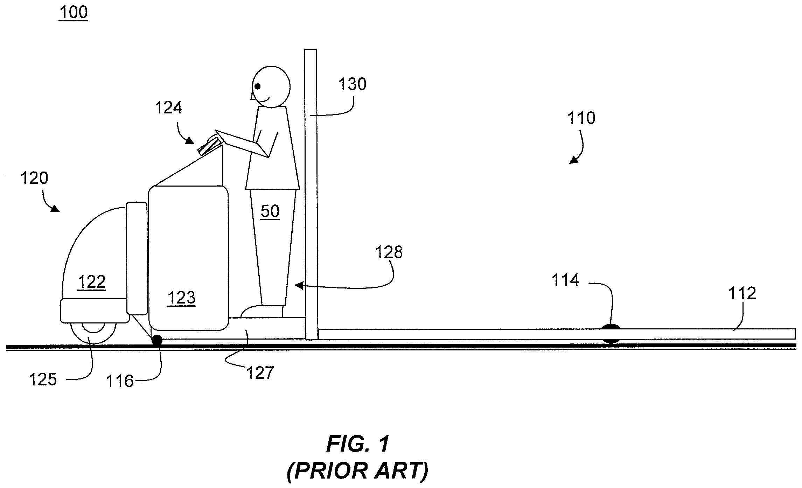

FIG. 1 is a side view of a pallet truck 100, as an example of a warehouse transport vehicle. The pallet truck 100 includes a rear payload portion 110, where a pair of forks 112 is located to engage and lift a pallet. The forks 112 can be raised and lowered. As is known in the art, the forks 112 are lowered to engage the pallet, and then raised to lift the pallet from the floor. Once the pallet is lifted, the pallet truck 100 can transport the pallet to another location, using load wheels 114 located in distal ends of the forks 112.

Pallet truck 100 includes a front drive portion 120 that includes a housing 122, within which may be located a motor and drive mechanisms (not shown). Within, or adjacent to, housing 122 is a battery compartment 123. A wheel 125 is also located in the front drive portion 120, usually beneath a linkage (not shown). A set of wheels 116 is forwardly located between the front wheel 125 and an operator area 128, which includes platform 127 for supporting an operator 50 during transportation. A back rest 130 defines a back of the operator area 128, and separates operator 50 from pallets loaded on forks 112. Pallet truck 100 is operator controlled using a set of drive controls 124, which include steering, start, drive, and stop mechanisms.

US 2004/0073359, "Position Control Device and Position Control Method of Stevedoring Apparatus in Industrial Vehicle", describes an improvement to a manually operated industrial vehicle in the form of a pallet truck. In particular, the application augments the pallet truck with a camera mounted below the forks that picks up an image of a pallet and acquires image data of a mark affixed to the pallet. The image data is processed to provide automatic positioning of a pair of forks used to lift the pallet in a load pickup mode.

GB 2 383 319, "Vehicle Switching System Control by External Sensor", describes an onboard system for switching a vehicle parameter, such as speed, acceleration, deceleration, lift speed or other performance parameters, to a preprogrammed value in response to a sensed external stimulus. A sensor is mounted on top of a cab of a forklift truck to detect remote emitters of electromagnetic radiation in a warehouse, such as infrared zone markers. Switching the vehicle parameter overrides the manual controls available to the operator.

US 2006/0104800, "Method and System for Material Transport", describes an industrial plant having a plurality of stationary response units 6 and a stationary data processing device arranged to sense movement of a mobile transport means. The mobile transport includes a detection device that communicates with the response units to determine the mobile transport's location within a coordinate system, which can be divided into areas and locations. The detection device has a radar module and determines its location through its communications with the response units. The detection device can also communicate with the stationary data processing system to receive transport instructions, position, and/or material information, including material pick-up and unloading points.

### SUMMARY

The claimed invention is defined by the independent claims. Embodiments are set out in the dependent claims.

### BRIEF DESCRIPTION OF THE DRAWINGS

The present invention will become more apparent in view of the attached drawings and accompanying detailed description. The embodiments depicted therein are provided by way of example, not by way of limitation, wherein like reference numerals refer to the same or similar elements. The drawings are not necessarily to scale, emphasis instead being placed upon illustrating aspects of the invention. In the drawings:
FIG. 1 is a side view of a pallet truck according to the prior art;
FIG. 2 is a side view of a first embodiment of an auto-navigating warehouse vehicle, according to aspects of the present invention;
FIGS. 3A-3D are views of a second embodiment of an auto-navigating warehouse vehicle, according to aspects of the present invention;
FIGS. 4A-4D are views of a third embodiment of an auto-navigating warehouse vehicle, according to aspects of the present invention;
FIGS. 5A-5D are views of a fourth embodiment of an auto-navigating warehouse vehicle, according to aspects of the present invention;
FIGS. 6A-6C are views of a fifth embodiment of an auto-navigating warehouse vehicle, according to aspects of the present invention; and
FIG. 7 is a block diagram of an embodiment of an automated navigation system that includes sensor position determination for an auto-navigating warehouse vehicle, according to aspects of the present invention.

### DETAILED DESCRIPTION OF PREFERRED EMBODIMENTS

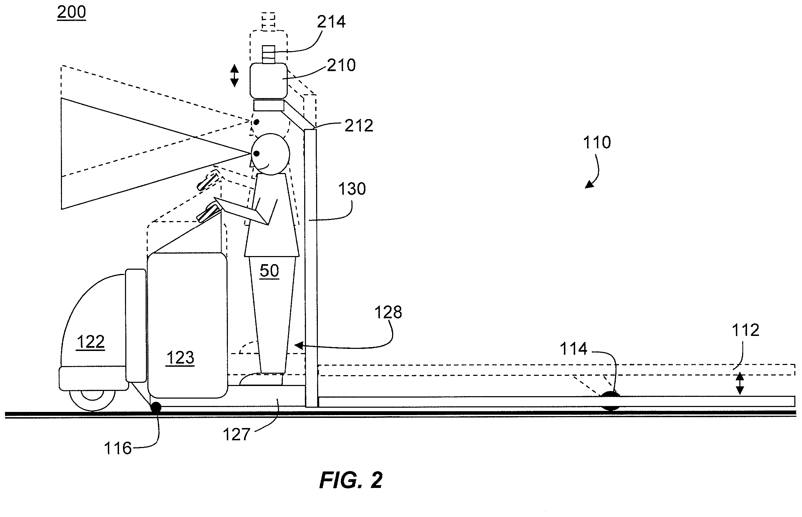

FIG. 2 is a side view of a first embodiment of a rideable auto-navigating warehouse vehicle with field-of-view (FOV) enhancing navigation sensor positioning, according to aspects of the present invention. In this embodiment, the auto-navigating warehouse vehicle takes the form of an auto-navigating pallet truck 200. Where portions of the auto-navigating pallet truck 200 are similar to corresponding portions of the pallet truck 100 of FIG. 1, the same reference numbers are used. The auto-navigating pallet truck 200 includes at least one navigation processor, storage media and a sensor head mounted on a mast. In the embodiment of FIG. 2, the auto-navigating pallet truck 200 is configured with self-navigating capability so that, for example, it could self- or auto- navigate through a facility, such as a warehouse or the like. Therefore, while shown, operator 50 may be optional with respect to navigation. For example, operator 50 may ride along while the auto-navigating pallet truck 200 navigates (i.e., drives) through a warehouse environment.

The navigation capability can be embodied in an apparatus that takes the form of at least one processor executing computer program code stored in at least one computer memory. The program code includes logic for navigating the warehouse transport vehicle (e.g., a pallet truck or other such vehicle) through an environment based on inputs from one or more sensors and preferably an electronic representation of the environment. Such processor or processors are operatively coupled to the start, stop, drive and steering mechanisms of the warehouse transport vehicle, in this embodiment, and to drive and navigate the auto-navigating warehouse transport vehicle through the environment. The hardware, software, and/or firmware comprising the navigation system can be located on the auto-navigating pallet truck 200 (e.g., within housing 122), remotely, or some combination thereof.

As an example, in some embodiments, the navigation system can employ an evidence grid approach, where the evidence grid is automatically updated as the auto-navigating vehicle travels through the environment, e.g., using information gathered by sensor head 210. The sensor head 210 can comprise one or more stereo cameras for collecting environmental data used for generating and updating a ma of the environment based on the evidence grid. For example, an auto-navigating warehouse vehicle in accordance with the present invention can use a navigation system that uses evidence grids as described in U. S. Patent No. 7,446,766, entitled *Multidimensional Evidence Grids And System And Methods For Applying* Same, and/or U. S. Patent Pub. US 2009-0119010, entitled *Multidimensional Evidence Grids and System and Methods for Applying* Same.

In FIG. 2, the sensor head 210 is movable in a vertical direction. The side view of the auto-navigating vehicle 200 shown in FIG. 2 shows a rear-mounted mast 212, which supports sensor head 210 and warning light (or light stack) 214. In this embodiment, the mast 212 is coupled to, or made part of, the back rest 130. Therefore, in this embodiment, the sensor head 210 (and light stack 214) moves vertically as the operator platform 127, backrest 130, and forks 112 raise and lower. In FIG. 2, the solid lines indicate the movable portions in a lowered (first) position. The dashed lines indicate movable portions of the pallet truck in a raised (second) position. In view of the vertical movement of the sensor head 210, e.g., one or more stereo cameras, the navigation system may determine a camera head offset that can be used as an adjustment factor when updating the evidence grid.

In some embodiments, the range of motion, which in this embodiment is vertical, can be known in advance and programmed into the navigation system used by the auto-navigating pallet truck 200. The vertical displacement or movement of the camera head 210 will be the same as that of the operator platform 127, backrest 130, and forks 112, in this embodiment. Therefore, detection, measurement, or calculation of the vertical change of distance or displacement can be determined with any of a variety of types of detectors and sensors. The determined vertical displacement can then be used as an adjustment or offset by the navigation system.

In some embodiments, two different positions can be defined for the camera head, a first position when the operator platform 127, backrest 130, and forks 112 are lowered and a second position when the operator platform 127, backrest 130, and forks 112 are raised. In such a case, either the first position or the second position can be a "home" position and the offset can be preprogrammed for the other of the first and second positions. Therefore, only a detection or sensing of whether the operator platform 127, backrest 130, and forks 112 are raised or lowered would be required to determine whether or not to apply the offset within the navigation system.

In FIG. 2, the movable mast 212 and sensor head 210 are positioned in a manner that does not obstruct the operator's 50 field of view (FOV) in the driving or forward direction, or other directions. And nothing on the auto-navigating pallet truck 200 materially obstructs the FOV of the sensor head 210.

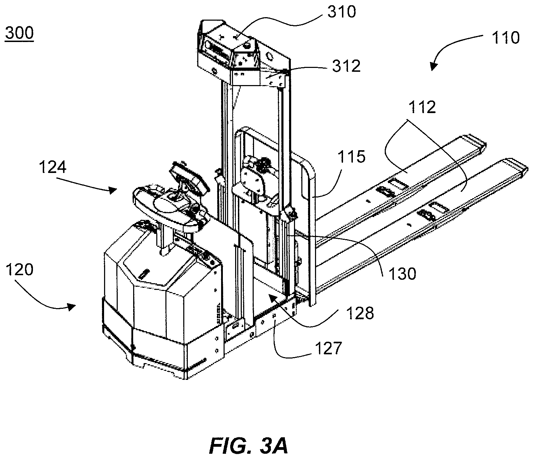

FIGS. 3A-3D provide different views of a second embodiment of a rideable auto-navigating warehouse vehicle with FOV enhancing navigation sensor positioning, according to aspects of the present invention.

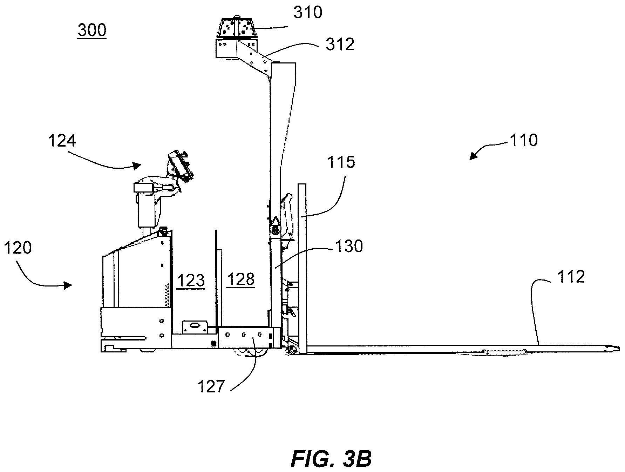

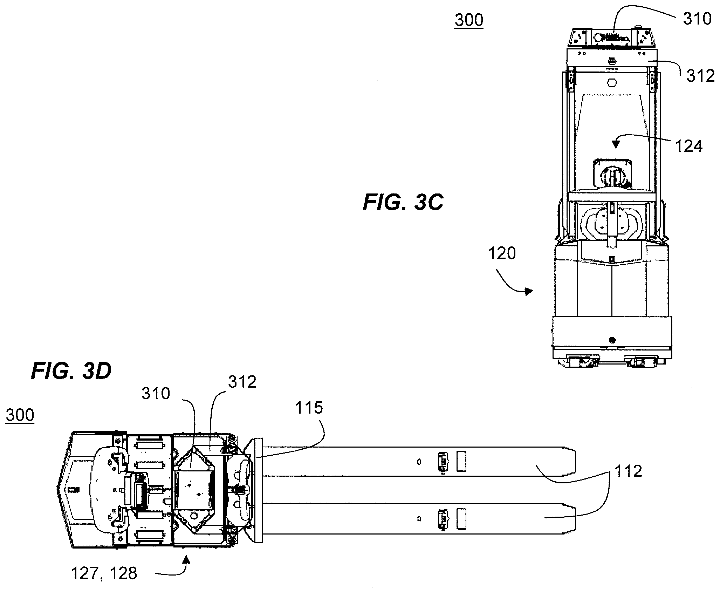

FIG. 3A is a perspective view of the second embodiment of an auto-navigating warehouse vehicle in the form of a pallet truck 300, which has a sensor head 310 and mast 312. FIG. 3B provides a side view of the auto-navigating pallet truck 300 of FIG. 3A. FIG. 3C provides a front view of the auto-navigating pallet truck 300 of FIG. 3A. And FIG. 3D provides a top view of the auto-navigating pallet truck 300 of FIG. 3A.

As with the embodiment of FIG. 2, the auto-navigating pallet truck 300 of FIGS. 3A-3D, the sensor head 310 can be or include a set of stereo cameras as a vision system, such as described in U. S. Patent No. 7,446,766, entitled *Multidimensional Evidence Grids and System and Methods for Applying* Same, and/or U. S. Patent Pub. US 2009-0119010, entitled *Multidimensional Evidence Grids and System and Methods for Applying* Same. In various embodiments, the vision system can be or include a set of stereo cameras, such as those described in U. S. Patent Application Serial No. 29/398127, filed July 26, 2012, entitled *Multi-Camera Head.* Therefore, in various embodiments, the sensor head 310 may be referred to as camera head 310, which will include one or more stereo cameras. In some embodiments, camera head 310 can include a plurality of stereo cameras providing a combined camera field of view of about 360 degrees in a plane parallel to a ground surface GS.

In the embodiment of FIGS. 3A-3D the mast 312 and sensor head 310 are not vertically movable with the forks 112. The back rest 130 does not move with the forks. Rather, a payload stop 115 defines a front end of the payload area 110, and is coupled to and moves with the forks 112. The operator platform 127 and operator area 128 also do not vertically move with the forks 112. Therefore, the payload stop 115 and forks move vertically independent of the remaining portions of the auto-navigating pallet truck 300. As a result, the sensor head 310 does not vertically move and associated offset and adjustment logic can be avoided.

The sensor head 310 is located above and to the rear of the operator compartment 128, such that it does not obstruct the view of an operator. And nothing on the auto-navigating pallet truck 300 materially obstructs the FOV of the sensor head 310.

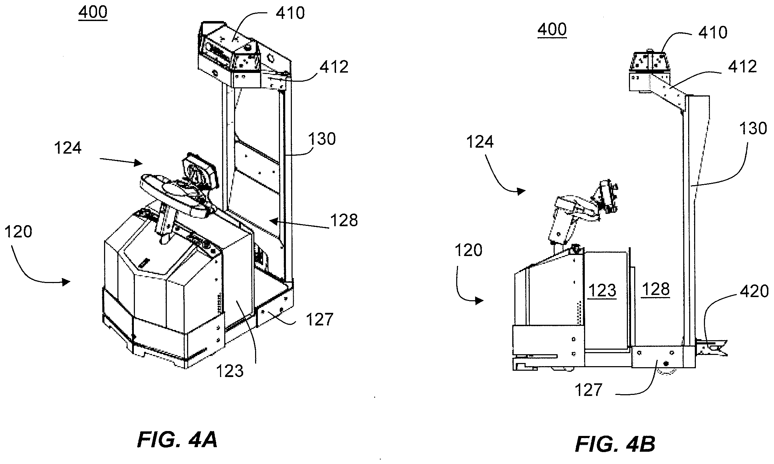

FIGS. 4A-4D provide different views of a third embodiment of an auto-navigating warehouse vehicle with FOV enhancing navigation sensor positioning, according to aspects of the present invention.

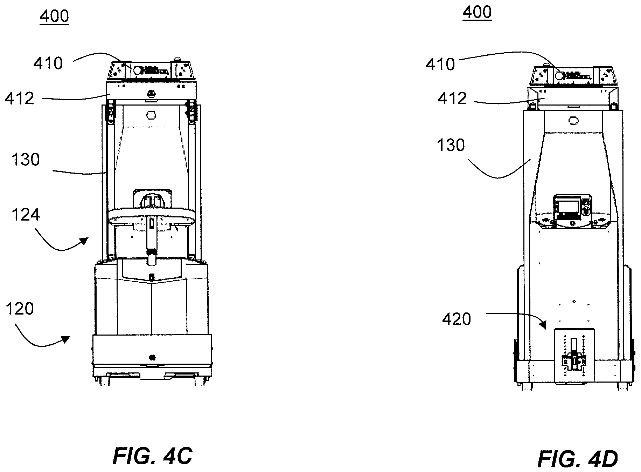

FIG. 4A is a perspective view of the auto-navigating warehouse vehicle in the form of a rideable auto-navigating tugger 400, which has a sensor head 410 and mast 412. FIG. 4B provides a side view of the auto-navigating tugger 400 of FIG. 4A. FIG. 4C provides a front view of the auto-navigating tugger 400 of FIG. 4A. And FIG. 4D provides a rear view of the auto-navigating tugger 400 of FIG. 4A.

The auto-navigating tugger 400 is configured with auto-navigation equipment, so that it could navigate through the warehouse without an operator, as discussed above. Where the navigation system requires a vision system, the sensor head 410 can include one or more stereo cameras and be referred to as a camera head 410, as discussed above. In some embodiments, camera head 410 can include a plurality of stereo cameras providing a combined camera field of view of about 360 degrees in a plane parallel to a ground surface GS.

The auto-navigating tugger 400 includes a platform 127 for supporting an operator, a operator area 128, and a back rest 130, as discussed above. Unlike the pallet trucks previously describer, the auto-navigating tugger does not include forks, or other payload portions, that raise and lower. Rather, the auto-navigating tugger 400 includes a hitch 420 configured to engage a cart, in a manner known in the art. Thus, the sensor head 410 will be substantially vertically stable, and secured to back rest 130 via the mast 412.

The sensor head 410 is located above and to the rear of the operator compartment 128, such that it does not obstruct the view of an operator. And nothing on the auto-navigating pallet truck 400 materially obstructs the FOV of the sensor head 410.

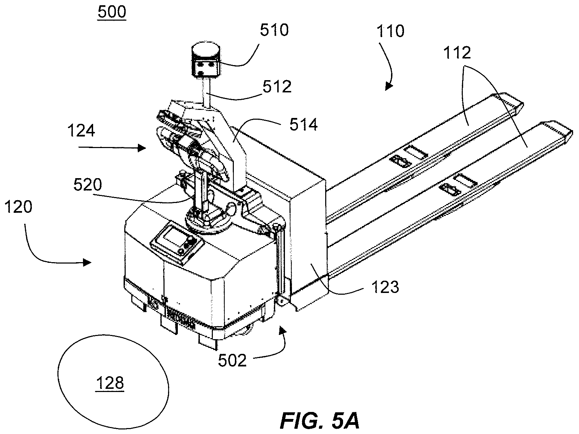

FIGS. 5A-5D provide different views of a fourth embodiment of an auto-navigating warehouse vehicle with FOV enhancing navigation sensor positioning, according to aspects of the present invention.

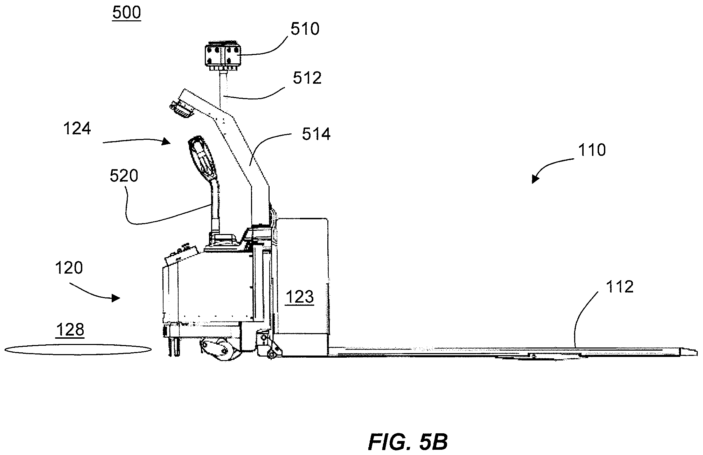

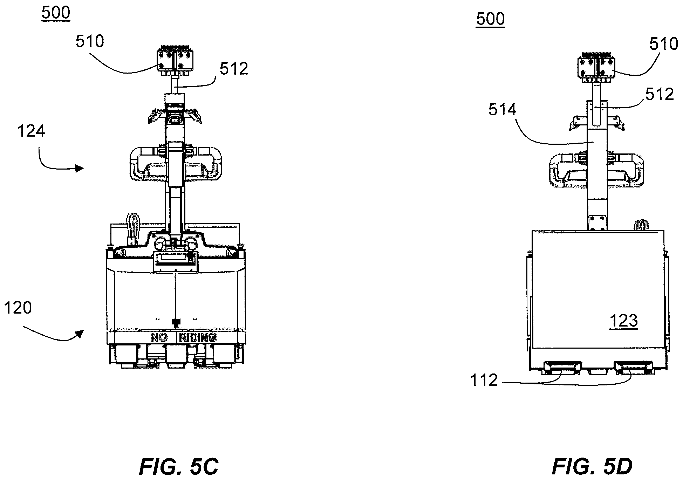

FIG. 5A is a perspective view of the auto-navigating warehouse vehicle in the form of a non-rideable auto-navigating pallet truck 500, which has a sensor head 510 and mast 512. FIG. 5B provides a side view of the auto-navigating pallet truck 500 of FIG. 5A. FIG. 5C provides a front view of the auto-navigating pallet truck 500 of FIG. 5A. And FIG. 5D provides a rear view of the auto-navigating pallet truck 500 of FIG. 5A.

The auto-navigating pallet truck 500 is configured with auto-navigation equipment, so that it could navigate through the warehouse without an operator, as discussed above. Where the navigation system requires a vision system, the sensor head 510 can include one or more stereo cameras, as discussed above. Here, since the auto-navigating pallet truck is not rideable, the operator area 128 is in front of the vehicle, proximate to the drive controls 124.

The auto-navigating pallet truck 500 has a handle 520 that includes the drive controls 124. The mast 512 is connects to a main body 502 of the pallet truck 500 via an arm 514. In this embodiment, the sensor head 510, mast 512, and arm 510 do not raise and lower with the forks 112. Additionally, in this embodiment, the sensor head 510, mast 512, and arm 510 are located behind the handle 520 and the drive controls 124 such that they do not block a FOV of an operator when moving forward. And nothing on the auto-navigating pallet truck 500 materially obstructs the FOV of the sensor head 510.

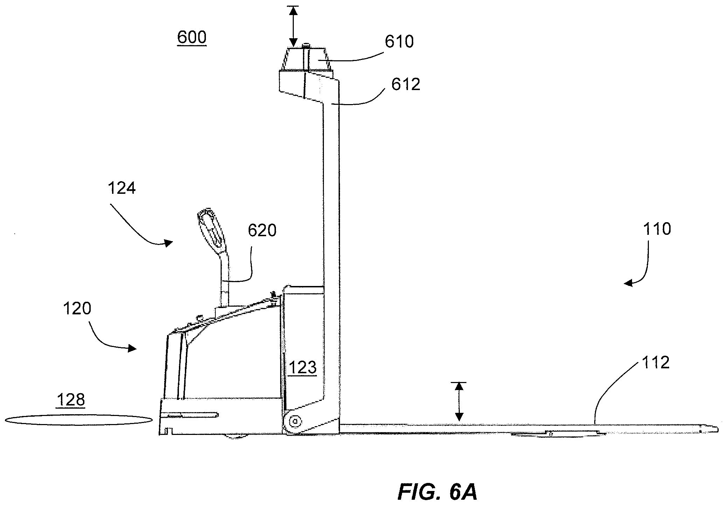

FIGS. 6A-6C provide different views of a fifth embodiment of an auto-navigating warehouse vehicle with FOV enhancing navigation sensor positioning, according to aspects of the present invention.

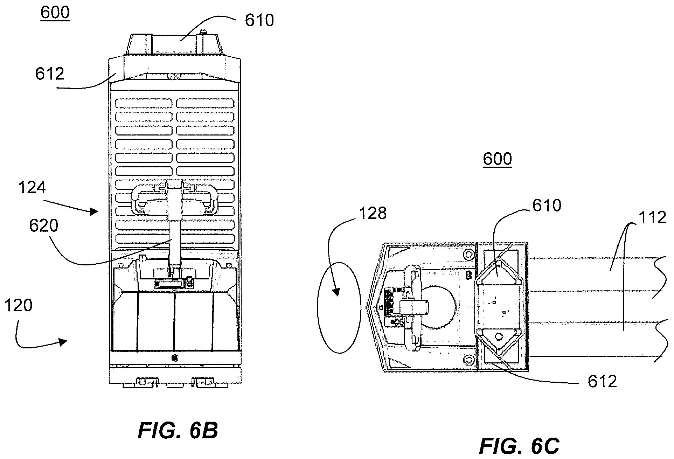

FIG. 6A is a side view of the auto-navigating warehouse vehicle in the form of a non-rideable auto-navigating pallet truck 600, which has a sensor head 610 and mast 612. FIG. 6B provides a front view of the auto-navigating pallet truck 600 of FIG. 6A. And FIG. 6C provides a top view of the auto-navigating pallet truck 600 of FIG. 6A.

The auto-navigating pallet truck 600 is configured with auto-navigation equipment, so that it could navigate through the warehouse without an operator, as discussed above. Where the navigation system requires a vision system, the sensor head 610 can include one or more stereo cameras, as discussed above. Here, since the auto-navigating pallet truck is not rideable, the operator area 128 is in front of the vehicle, proximate to the drive controls 124.

The auto-navigating pallet truck 600 has a handle 620 that includes the drive controls 124. In this embodiment, the sensor head 610 is secured to a mast 612, which connects to a main body 620 of the auto-navigating pallet truck 600. In this embodiment, the mast 612 is configured to raise and lower with the forks 112.

In this embodiment, the sensor head 610 is movable in a vertical direction. The side view of the auto-navigating vehicle 600 shown in FIG. 6A shows a rear-mounted mast 612, which supports sensor head 610. In this embodiment, the sensor head 610 moves vertically as the forks 112 raise and lower. In view of the vertical movement of the sensor head 610, e.g., one or more stereo cameras, the navigation system may determine a camera head offset that can be used as an adjustment factor when updating an evidence grid map or the like used in the auto-navigation.

In some embodiments, the range of motion, which in this embodiment is vertical, can be known in advance and programmed into the navigation system used by the auto-navigating pallet truck 600. The vertical displacement or movement of the camera head 610 will be the same as that of the forks 112, in this embodiment. Therefore, detection, measurement, or calculation of the vertical change of distance or displacement can be determined with any of a variety of types of detectors and sensors. The determined vertical displacement can then be used as an adjustment or offset by the navigation system.

In some embodiments, two different positions can be defined for the camera head, a first position when the forks 112 are lowered and a second position when the forks 112 are raised. In such a case, either the first position or the second position can be a "home" position and the offset can be preprogrammed for the other of the first and second positions. Therefore, only a detection or sensing of whether the forks 112, mast 610, or sensor head 610 are raised or lowered would be required to determine whether or not to apply the offset within the navigation system.

Additionally, in this embodiment, the sensor head 610 and mast 612 are located behind the handle 620 and the drive controls 124 such that they do not block a FOV of an operator when moving forward. And nothing on the auto-navigating pallet truck 600 materially obstructs the FOV of the sensor head 610.

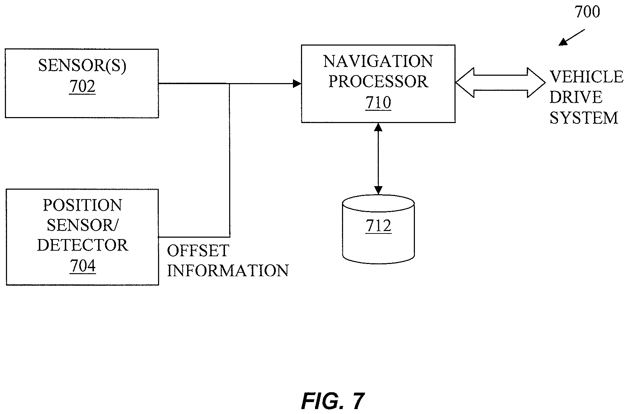

FIG. 7 is a block diagram of an embodiment of an automated navigation system that includes sensor position determination for an auto-navigating warehouse vehicle, according to aspects of the present invention.

The navigation system 700 includes sensor position determination capability for an auto-navigating vehicle, such as those shown and described herein and those not explicitly shown and described herein but reasonably understood to fall within the context and scope of the present invention. A navigation processor 710 can perform the primary computer-based functioning of the navigation system, such as send control information to a vehicle drive system of the robotic vehicle, e.g., auto-navigating pallet truck or tugger, as discussed above. In this embodiment, navigation processor 710 uses an evidence grid stored in a storage media 712 that represents the environment for navigation. Storage media 712 can be or include, for example, a non-transitory electronic, magnetic, or optical storage device. The navigation processor 710 can user data from sensor(s) 702, e.g., camera head 310, to determine a location of the robotic vehicle within the environment, using the evidence grid as a frame of reference. Navigation processor 710 can also use the sensor data to update the evidence grid.

Position sensors/ detectors 704 can detect, sense, or otherwise determine the position of the sensor(s) 702, e.g., whether camera head 310 is in the first position, second position, or somewhere in between if called for by the particular embodiment. The information can be provided by the position sensor/ detector 704 to the navigation processor 710 as offset information. Accordingly, the navigation processor 710 takes the offset into account when determining location of the auto-navigating warehouse vehicle relative to the evidence grid and when updating the evidence grid.

As a result, the mast and sensor (or camera) head can be positioned on a auto-navigating warehouse (or robotic) vehicle without obstructing the field of view of the operator, whether the operator platform or payload area are in a lowered or raised position.

Coupling the mast and sensor (e.g., camera) head to the robotic vehicle away from the drive portion of the robotic vehicle can also significantly reduce vibration at the sensor (e.g., camera) head and, consequently, reduce errors in the navigation system.

While the foregoing has described what are considered to be the best mode and/or other preferred embodiments, it is understood that various modifications can be made therein and that the invention or inventions may be implemented in various forms and embodiments, and that they may be applied in numerous applications, only some of which have been described herein.

## Claims

1. A method of auto-navigating a warehouse vehicle (200, 300, 400, 500, 600), wherein the warehouse vehicle (200, 300, 400, 500, 600) comprises a sensor head (210,310,410) that can be moved between first and second positions, the method comprising:
providing a robotic vehicle (200, 300, 400, 500, 600), including:
a first portion that is vertically stationary, the first portion including drive controls (124) configured to provide operator (50) drive control of the vehicle when in an operator area (128);
a second portion defining a payload area (110), wherein the second portion is configured to raise and lower between a first position and a second position; and
**characterized in that** the robotic vehicle (200, 300, 400, 500, 600) is auto-navigating **and further characterized by,**
a sensor head (210,310,410) supported by a mast (212), wherein the sensor head forms part of a navigation system (700), wherein the sensor head is disposed above the operator area and between the operator area and the payload area so that the sensor head and mast (212) do not obstruct a field of view of an operator (50) in the operator area when the second portion is in either of the first position and the second position;
determining an offset of the sensor head when moved from the first position to the second position;
the navigation system adjusting the sensor data using the offset; and
auto-navigating the robotic vehicle (200, 300, 400, 500, 600) based on the adjusted sensor data.

2. The method of claim 1, wherein the sensor head (210,310,410) is a camera head (310, 410) comprising one or more stereo cameras; and optionally,
wherein the camera head includes a plurality of stereo cameras providing a combined camera field of view of about 360 degrees in a plane parallel to a ground surface (GS).

3. The method of claim 1, wherein the vehicle is a rideable vehicle (200, 300, 400) comprising in the operator area:
an operator platform (127) configured to hold the operator; and
a back rest (130) disposed between the operator platform and the payload area (110),
wherein the sensor head is coupled to the backrest.

4. The method of claim 1, wherein the payload area comprises a movable payload portion and the sensor head remains stationary as the movable payload portion moves vertically; and optionally wherein the vehicle is an auto-navigating pallet truck (100) and the movable payload portion is a pair of forks (112).

5. The method of claim 1, wherein the payload area comprises a movable payload portion and the sensor head moves vertically when the movable payload portion moves vertically, and optionally, wherein the vehicle is an auto-navigating pallet truck (200, 300, 500, 600) and the movable payload portion is a pair of forks (112).

6. The method of claim 5, further comprising:
determining, via at least one position detector (704), a movement of the sensor head and providing, via the position detector (704), offset information indicating such movement to the navigation system, and optionally,
adjusting, by the navigation system, sensor data received from the sensor head using an offset determined from the offset information, and optionally,
updating, by the navigation system, an evidence grid that represents the environment using the adjusted sensor data.

7. The method of claim 1, and any of:
a) wherein the environment is a warehouse; and
b) wherein the robotic vehicle is an auto-navigating tugger and the operator area is in front of the vehicle.

8. The method of claim 1, and one of:
a) wherein the operator area is in the first portion; or
b) wherein the operator area is in the second portion; or
c) wherein the operator area is in front of the first portion.

9. The method of claim 1, further comprising:
determining, by at least one position detector (704), a movement of the sensor head and providing, by the position detector (704), offset information indicating such movement to the navigation system.

10. The method of claim 9, adjusting, by the navigation system, sensor data received from the sensor head using an offset determined from the offset information.

11. A warehouse vehicle (200, 300, 400, 500, 600) configured to carry out the method of claim 1.

## Patentansprüche

1. Verfahren zum automatischen Navigieren eines Warenlagerfahrzeugs (200, 300, 400, 500, 600), wobei das Warenlagerfahrzeug (200, 300, 400, 500, 600) einen Sensorkopf (210, 310, 410) umfasst, der zwischen einer ersten und einer zweiten Position bewegt werden kann, wobei das Verfahren Folgendes umfasst:
Bereitstellen eines Roboterfahrzeugs (200, 300, 400, 500, 600), das Folgendes einschließt:
einen ersten Abschnitt, der vertikal stationär ist, wobei der erste Abschnitt Fahrsteuerungen (124) einschließt, die konfiguriert sind, um eine Fahrsteuerung des Bedieners (50) des Fahrzeugs bereitzustellen, wenn er sich in einem Bedienerbereich (128) befindet;
einen zweiten Abschnitt, der einen Nutzlastbereich (110) definiert, wobei der zweite Abschnitt konfiguriert ist, um zwischen einer ersten Position und einer zweiten Position angehoben und abgesenkt zu werden; und
**dadurch gekennzeichnet, dass** das Roboterfahrzeug (200, 300, 400, 500, 600) automatisch navigiert, und ferner **gekennzeichnet durch**
einen Sensorkopf (210, 310, 410), der von einem Mast (212) gestützt wird, wobei der Sensorkopf Teil eines Navigationssystems (700) ist, wobei der Sensorkopf oberhalb des Bedienerbereichs und zwischen dem Bedienerbereich und dem Nutzlastbereich angeordnet ist, so dass der Sensorkopf und der Mast (212) ein Sichtfeld eines Bedieners (50) in dem Bedienerbereich nicht behindern, wenn sich der zweite Abschnitt entweder in der ersten oder der zweiten Position befindet;
Bestimmen einer Verschiebung des Sensorkopfes, wenn er sich von der ersten Position in die zweite Position bewegt hat;
Anpassen durch das Navigationssystem der Sensordaten unter Verwendung der Verschiebung; und
automatisches Navigieren des Roboterfahrzeugs (200, 300, 400, 500, 600) basierend auf den angepassten Sensordaten.

2. Verfahren nach Anspruch 1, wobei der Sensorkopf (210, 310, 410) ein Kamerakopf (310, 410) ist, der eine oder mehrere Stereokameras umfasst; und
wobei wahlweise der Kamerakopf eine Vielzahl von Stereokameras einschließt, die ein kombiniertes Kamerasichtfeld von ungefähr 360 Grad in einer Ebene parallel zu einer Bodenfläche (GS) bereitstellen.

3. Verfahren nach Anspruch 1, wobei das Fahrzeug ein fahrbares Fahrzeug (200, 300, 400) ist, das in dem Bedienerbereich Folgendes umfasst:
eine Bedienerplattform (127), die konfiguriert ist, um den Bediener zu halten; und
eine Rückenlehne (130), die zwischen der Bedienerplattform und dem Nutzlastbereich (110) angeordnet ist,
wobei der Sensorkopf mit der Rückenlehne gekoppelt ist.

4. Verfahren nach Anspruch 1, wobei der Nutzlastbereich einen beweglichen Nutzlastabschnitt umfasst und der Sensorkopf stationär bleibt, wenn sich der bewegliche Nutzlastbereich vertikal bewegt; und wobei wahlweise das Fahrzeug ein automatisch navigierender Hubwagen (100) ist und der bewegliche Nutzlastabschnitt ein Paar Gabeln (112) ist.

5. Verfahren nach Anspruch 1, wobei der Nutzlastbereich einen beweglichen Nutzlastabschnitt umfasst und sich der Sensorkopf vertikal bewegt, wenn sich der bewegliche Nutzlastabschnitt vertikal bewegt, und wobei wahlweise das Fahrzeug ein automatisch navigierender Hubwagen (200, 300, 500, 600) ist und der bewegliche Nutzlastabschnitt ein Paar Gabeln (112) ist.

6. Verfahren nach Anspruch 5, ferner umfassend:
Bestimmen, über mindestens einen Positionsdetektor (704), einer Bewegung des Sensorkopfes und Bereitstellen, über den Positionsdetektor (704), von Verschiebungsinformationen, die eine solche Bewegung angeben, für das Navigationssystem, und wahlweise
Anpassen, durch das Navigationssystem, von Sensordaten, die von dem Sensorkopf erhalten werden, unter Verwendung einer Verschiebung, die anhand der Verschiebungsinformationen bestimmt wird, und wahlweise
Aktualisieren, durch das Navigationssystem, eines Beweisrasters, das die Umgebung darstellt, unter Verwendung der angepassten Sensordaten.

7. Verfahren nach Anspruch 1 :
a) wobei die Umgebung ein Warenlager ist; und
b) wobei das Roboterfahrzeug ein automatisch navigierender Schlepper ist und der Bedienerbereich vor dem Fahrzeug liegt.

8. Verfahren nach Anspruch 1 :
a) wobei der Bedienerbereich in dem ersten Abschnitt liegt; oder
b) wobei der Bedienerbereich in dem zweiten Abschnitt liegt; oder
c) wobei der Bedienerbereich vor dem ersten Abschnitt liegt.

9. Verfahren nach Anspruch 1, ferner umfassend:
Bestimmen, durch mindestens einen Positionsdetektor (704), einer Bewegung des Sensorkopfes und Bereitstellen, durch den Positionsdetektor (704), von Verschiebungsinformationen, die eine solche Bewegung angeben, für das Navigationssystem.

10. Verfahren nach Anspruch 9, umfassend das Anpassen, durch das Navigationssystem, von Sensordaten, die von dem Sensorkopf erhalten werden, unter Verwendung einer Verschiebung, die anhand der Verschiebungsinformationen bestimmt wird.

11. Warenlagerfahrzeug (200, 300, 400, 500, 600), das konfiguriert ist, um das Verfahren nach Anspruch 1 auszuführen.

## Revendications

1. Procédé servant à faire naviguer de manière automatique un véhicule (200, 300, 400, 500, 600) d'entrepôt, le véhicule (200, 300, 400, 500, 600) d'entrepôt comprenant une tête de capteur (210, 310, 410) pouvant être déplacée entre des première et seconde positions, le procédé comprenant :
l'utilisation d'un véhicule robotisé (200, 300, 400, 500, 600) comportant :
une première partie verticalement fixe, la première partie comprenant des commandes de conduite (124) conçues pour permettre à un opérateur (50) la commande de la conduite du véhicule lorsqu'il se trouve dans une zone (128) d'opérateur ;
une seconde partie définissant une zone de charge utile (110), la seconde partie étant conçue pour effectuer une montée et une descente entre une première position et une seconde position ; et
**caractérisé en ce que** le véhicule robotisé (200, 300, 400, 500, 600) peut naviguer de manière automatique, **et caractérisé en outre par**
une tête de capteur (210, 310, 410) portée par un mât (212), la tête de capteur faisant partie d'un système de navigation (700), la tête de capteur étant disposée au-dessus de la zone de l'opérateur et entre la zone de l'opérateur et la zone de charge utile de telle façon que la tête de capteur et le mât (212) ne bloquent pas un champ de vision d'un opérateur (50) dans la zone de l'opérateur lorsque la seconde partie est soit dans la première position, soit dans la seconde position ;
la détermination d'un décalage de la tête de capteur lors de son déplacement de la première position à la seconde position ;
le système de navigation réglant les données de capteur à l'aide du décalage ; et
la navigation automatique du véhicule robotisé (200, 300, 400, 500, 600) en fonction des données de capteur réglées.

2. Le procédé de la revendication 1, dans lequel la tête de capteur (210, 310, 410) est une tête de caméra (310, 410) comprenant une ou plusieurs caméras stéréoscopiques ; et, éventuellement,
dans lequel la tête de caméra comprend une pluralité de caméras stéréoscopiques fournissant un champ de vision des caméras combinées d'environ 360 degrés dans un plan parallèle à une surface du sol (GS).

3. Le procédé de la revendication 1, dans lequel le véhicule est un véhicule (200, 300, 400) pouvant être piloté et qui comprend, dans la zone de l'opérateur :
une plateforme (127) d'opérateur conçue pour porter l'opérateur ; et
un dossier (130) disposé entre la plateforme d'opérateur et la zone de charge utile (110),
et dans lequel la tête de capteur est accouplée au dossier.

4. Le procédé de la revendication 1, dans lequel la zone de charge utile comprend une partie à charge utile mobile, et la tête de capteur reste fixe à mesure que la partie à charge utile mobile se déplace verticalement ; et, éventuellement, dans lequel le véhicule est un transpalette (100) à navigation automatique et la partie à charge utile mobile est une paire de fourches (112).

5. Le procédé de la revendication 1, dans lequel la zone de charge utile comprend une partie à charge utile mobile, et la tête de capteur se déplace verticalement lorsque la partie à charge utile mobile se déplace verticalement, et, éventuellement, dans lequel le véhicule est un transpalette (200, 300, 500, 600) à navigation automatique et la partie à charge utile mobile est une paire de fourches (112).

6. Le procédé de la revendication 5, comprenant en outre :
la détermination, par l'intermédiaire d'au moins un détecteur de position (704), d'un déplacement de la tête de capteur, et la fourniture, par l'intermédiaire du détecteur de position (704), d'informations de décalage indiquant un tel déplacement au système de navigation, et, éventuellement,
le réglage, par le système de navigation, des données de capteur reçues à partir de la tête de capteur à l'aide d'un décalage déterminé à partir des informations de décalage, et, éventuellement,
la mise à jour, par le système de navigation, d'une grille d'indication qui représente l'environnement à l'aide des données de capteur réglées.

7. Le procédé de la revendication 1 :
a) dans lequel l'environnement est un entrepôt ; et/ou
b) dans lequel le véhicule robotisé est un charriot tracteur à navigation automatique, et la zone de l'opérateur est à l'avant du véhicule.

8. Le procédé de la revendication 1 :
a) dans lequel la zone de l'opérateur est dans la première position ; ou
b) dans lequel la zone de l'opérateur est dans la seconde position ; ou
c) dans lequel la zone de l'opérateur est devant la première position.

9. Le procédé de la revendication 1, comprenant en outre :
la détermination, par au moins un détecteur de position (704), d'un déplacement de la tête de capteur, et la fourniture, par le détecteur de position (704), d'informations de décalage indiquant un tel déplacement au système de navigation.

10. Le procédé de la revendication 9, comprenant le réglage, par le système de navigation, des données de capteur reçues à partir de la tête de capteur, à l'aide d'un décalage déterminé à partir des informations de décalage.

11. Véhicule (200, 300, 400, 500, 600) d'entrepôt, conçu pour mettre en oeuvre le procédé de la revendication 1.
